# EUROPÄISCHE PATENTANMELDUNG

(11) **EP 0 988 954 A2**
(43) Veröffentlichungstag der Anmeldung: **29.03.2000**
(21) Anmeldenummer: 99115058.2
(22) Anmeldetag: 04.08.1999
(51) Int. Cl.: B29C 47/04, B29C 47/06, B29C 47/56

(54) **Vorrichtung und Verfahren zur Herstellung von zwei- oder mehrfarbigen Folien, Schalttafelfolien, Armaturenbrettfolien**

(30) Priorität: 09.09.1998 DE 19841097; 25.03.1999 DE 19913456
(71) Anmelder: ALKOR GMBH KUNSTSTOFFE, D-81451 München (DE)
(72) Erfinder: Heitz, Heinrich, Dr., Dipl.-Ing., 82110 Germering (DE); Rank, Bernhard, 85642 Steinhöring (DE); Böhm, Herbert, 82402 Seeshaupt (DE)

(57) **Zusammenfassung**

Vorliegende Erfindung betrifft eine Vorrichtung und ein Verfahren zur Herstellung von zwei und mehrfarbigen Folien bestehend aus mindestens zwei nebeneinander angeordneten verschiedenfarbigen Folienbahnen oder Folienbahnstreifen, unter Verwendung einer Vorrichtung, die mindestens zwei Extruder und eine damit verbundene Mehrkanalextrusionsdüse mit einer Düsenaustrittslippe enthält, wobei jeder der Extruder zur Zuführung eines jeweils verschiedenfarbigen Massenstromes ausgelegt ist, und wobei die Merkanalextrusionsdüse mindestens zwei Eingangsöffnungen aufweist, welche über Zuführungsleitungen mit jeweils einem Ausgang eines Extruders verbunden sind.

Gemäß der Erfindung weist die Mehrkanalextrusionsdüse im Bereich der Zusammenführung der mindestens zwei Massenströme einen sich parallel oder annähernd parallel zur Austrittslippe erstreckenden Führungsbalken auf, wobei zwei benachbarte, mit den jeweiligen Zuführungsleitungen verbundene Fließkanäle mit dem jeweils verschiedenfarbigen Massenstrom innerhalb der Mehrkanalextrusionsdüse zunächst räumlich getrennt, zur Austrittslippe hin verbreitert und an zwei verschiedenen Flächen des Führungsbalkens vorbeigeführt werden.

Die derart hergestellten Folien können anschließend mit verschiedenen Prägemustern versehen werden, wobei die Trennlinie zwischen den Prägemustern mit der Farbtrennlinie übereinstimmt.

Hinsichtlich der bevorzugten Ausführungsform wird auf die Schutzansprüche verwiesen.

## Beschreibung

Die vorliegende Erfindung betrifft eine Vorrichtung und ein Verfahren zur Herstellung von zwei- oder mehrfarbigen Folien bestehend aus mindestens zwei nebeinander angeordneten verschiedenfarbigen Folienbahnen oder Folienbahnstreifen, unter Verwendung einer Vorrichtung, die mindestens zwei Extruder und eine damit verbundene Mehrkanalextrusionsdüse mit einer Düsenaustrittslippe enthält, wobei jeder der Extruder zur Zuführung eines jeweils verschiedenfarbigen Massenstromes ausgelegt ist und wobei die Mehrkanalextrusionsdüse mindestens zwei Eingangsöffnungen aufweist, welche über Zuführungsleitungen mit jeweils einem Ausgang eines Extruders verbunden sind.

Sie betrifft ebenso eine Vorrichtung und ein Verfahren zur Herstellung von zwei- oder mehrfarbigen Folien bestehend aus einer Trägerfolie oder Tragerschicht und mindestens zwei nebeinander auf dieser Trägerfolie oder Trägerschicht angeordneten verschiedenfarbigen Oberfolien oder Oberschichten, unter Verwendung einer Vorrichtung, die mindestens drei Extruder und eine damit verbundene Mehrkanalextrusionsdüse mit einer Düsenaustrittslippe enthält, wobei einer der Extruder zur Zuführung von Trägerfolien- oder Trägerschichtmaterial und mindestens zwei Extruder zur Zuführung von unterschiedlich gefärbten Oberfolien- oder Oberschiehtmaterialien ausgelegt sind.

Mittels der vorliegenden Erfindung gelingt es, Schalttafelfolien, Armaturenbrettfolien, daraus hergestellte Seitenwandteile, Türverkleidungen, Dachinnenverkleidungen, Innenrückwandteile, Armatützenverkleidungen und andere Innenverkleidungsteile für Kraftfahrzeuge aus diesen Folien herzustellen, bei denen mindestens zwei verschiedenfarbige Folienbahnen oder Folienbahnstreifen nebeneinander angeordnet sind oder mindestens zwei verschiedenfarbige Oberfolien oder Oberschichten auf einer Trägerfolie oder Trägerschicht angeordnet sind.

Aus EP-0 759 351 A1 ist bereits ein Verfahren und eine Vorrichtung zur Herstellung von zwei- oder mehrfarbigen Schalttafelfolien, Armaturenbrettfolien oder daraus hergestellten Annaturenbrettern bekannt, bei dem unter Verwendung mindestens einer Trägerfolie oder -schicht und mindestens einer darauf angeordneten, Farbstoffe und/oder Farbpigmente enthaltende Oberfolie oder Oberschicht, wobei die aus zwei oder mehreren Extrudern kommenden Kunststoffschmelzen für diese Folien oder Schichten zunächst einem Adapter oder einer Blackbox zugeführt werden, die mindestens eine Öffnung oder einen Spalt für die Trägerfolie oder -schicht und mindestens eine weiteren Öffnung für die Oberfolie oder Oberschicht aufweist und in der ein keilförmiger Vorsprung oder im Querschnitt dreieckiger Vorsprung angeordnet ist, wobei mindestens zwei verschieden- farbige schmelzförmige Kunststoffe für die Oberfolie oder Oberschicht, die die gleiche oder nahezu gleiche Viskosität aufweisen, eingesetzt werden, die zunächst durch den keilförmigen oder im Querschnitt dreieickförmigen Vorsprung im Adapter oder in der Blackbox getrennt oder teilweise getrennt sind, jedoch nach dem Durchtritt durch den Adapter oder die Blackbox ohne Verwendung eines, die beiden Schmelzen trennenden Steges nebeneinander geführt werden, wobei sich die verschiedenfarbigen Schmelzen der Oberfolien mit der Schmelzschicht der Unterfolie oder Unterschicht vor dem Austritt aus der Extruderdüse vereinigen.

Mit diesem bekannten Verfahren bzw. Vorrichtung können jedoch nur Kunststoffschmelzen gleicher oder annähernd gleicher Viskosität verarbeitet werden. Ferner sind die aneinander grenzenden Oberfolien oder Oberschichten durch einen harten Übergang voneinander getrennt.

Ziel und Aufgabe der vorliegenden Erfindung war es, eine Vorrichtung und ein Verfahren zu finden, womit nicht nur Materialien unterschiedlicher Viskosität verarbeitet werden können, sondern auch Folien mit weichen, definierten Farbübergängen/Matrialübergängen zwischen den benachbarten verschiedenfarbigen Oberfolien oder Oberschichten herstellbar sind.

Erfindungsgemäß wurde festgestellt, daß diese Ziele und Aufgaben unter Verwendung einer Vorrichtung zur Herstellung von zwei- oder mehrfarbigen Folien, Schalttafelfolien, Armaturenbrettfolien dadurch gelöst werden, daß in den eingangs genannten Verfahren bzw. Vorrichtungen die Mehrkanalextrusionsdüse im Bereich der Zusammenführung der mindestens zwei Massenströme einen sich parallel oder annähernd parallel zur Austrittslippe erstrekkenden Führungsbalken aufweist, und wobei zwei benachbarte, mit den jeweiligen Zuführungsleitungen verbundene Fließkanäle für den jeweils verschiedenfarbigen Massenstrom innerhalb der Mehrkanalextrusionsdüse zunächst räumlich getrennt, zur Austrittslippe hin verbreitert und an zwei verschiedenen Flächen des Fübrungsbalkens vorbeigeführt sind.

Nach einer weiteren Ausführungsform besitzt eine Vorrichtung zur Herstellung von zwei- oder mehrfarbigen Folien bestehend aus einer Trägerfolie oder Trägerschicht und mindestens zwei nebeneinander auf dieser Trägerfolie oder Trägerschicht angeordneten verschiedenfarbigen Oberfolien oder Oberschichten mindestens 3 Extruder und eine damit verbundene Mehrkanalextrusionsdüse mit einer Düsenaustrittslippe, wobei einer der Extruder zur Zuführung von Trägerfolien- oder Tragerschichtmaterial und mindestens zwei Extruder zur Zuführung von verschiedenfarbigen Oberfolien- oder Oberschichtmaterialien ausgelegt sind. Gemäß dieser Ausführung weist die Mehrkanalextrusionsdüse im Bereich der Zusammenführung der mindestens zwei Oberfolien- oder Oberschichtmaterialien einen sich parallel oder annähernd parallel zur Austrittslippe erstreckenden Führungsbalken auf, wobei zwei benachbarte, mit den jeweiligen Zuführungsleitungen verbundene Fließkanäle für das jeweils verschiedenfarbige Oberfolien- oder Oberschichtmaterial innerhalb der Mehrkanalextrusionsdüse zunächst räumlich getrennt, zur Austrittslippe hin verbreitert und an zwei verschiedenen Flächen des Führungsbalkens vorbeigeführt sind.

In einer bevorzugten Ausführungsform sind zunächst die Fließkanäle der verschiedenfarbigen Oberfolien- oder Oberschichtmaterialien zusammengeführt. Dieser gemeinsame Fließkanal ist dann mit dem Fließkanal des Trägerfolien- oder Trägerschichtenmaterials vereinigt.

Gemäß einer weiteren bevorzugten Ausführungsform erstrecken sich die Fließkanäle zur Führung der Oberfolien- oder Oberschichtenmaterialien im vorderen Bereich der Mehrkanalextrusionsdüse aneinandergrenzend nebeneinander in jeweils vorgegebenen Breiten über oder annähernd über die volle Breite der Düse. Ebenso erstreckt sich der Fließkanal für das Trägerfolienmaterial im vorderen Bereich der Düse über oder annähernd über die volle Breite der Düse.

Vorzugsweise besteht die Mehrkanalextrusionsdüse aus mindestens vier übereinander angeordneten Platten, wobei jeweils zwischen zwei benachbarten Platten mindestens ein Fließkanal angeordnet ist, wobei die Fließkanäle im hinteren Bereich der Mehrkanalextrusionsdüse räumlich getrennt sind.

Nach einer bevorzugten Ausführungsform erstrecken sich die Fließkanäle zur Führung der Folienbahnmaterialien im vorderen Bereich der Mehrkanalextrusionsdüse aneinandergrenzend nebeneinander in jeweils vorgegebenen Breiten über die volle oder annähernd volle Breite der Düse.

In einer anderen Ausführungsform besteht die Mehrkanalextrusionsdüse vorzugsweise aus mindestens drei übereinander angeordneten Platten, wobei jeweils zwischen zwei benachbarten Platten mindestens ein Fließkanal angeordnet ist, wobei die Fließkanäle im hinteren Bereich der Mehrkanalextrusionsdüse räumlich getrennt sind.

Insbesondere weist der Führungsbalken mindestens eine am Führungsbalken angeordnete keilähnliche Führung auf.

In einer weiteren bevorzugten Ausführungsform sind die Fließkanäle innerhalb der Mehrkanalextrusionsdüse erst in deren vorderen Bereich verbreiten und, vorzugsweise in Flußrichtung hinter dem Führungsbalken, zusammengeführt.

Gemäß einer besonders bevorzugten Ausführungsform weist der Führungsbalken zur Erzielung eines harten Übergangs in jeder der beiden Flächen in diesem Grenzbereich eine in etwa parallel zur Extrusionsrichtung und in etwa senkrecht zur jeweiligen Fläche angeordnete in etwa rechtwinklige Kante auf.

Andererseits weist der Führungsbalken zur Erzielung eines weichen Übergangs in jeder der beiden Flächen in diesem Grenzbereich eine in etwa parallel zur Extrusionsrichtung und in einem Winkel zur jeweiligen Fläche geordnete abgeschrägte Kante auf. Hierbei wird der Überlappbereich der beiden benachbarten verschiedenfarbigen Materialien bei einem weichen Übergang durch die Verlaufsform der abgeschrägten Kante bestimmt.

Vorzugsweise ist die zwei- oder mehrfarbige Folie als Schalttafelfolie, Annaturenbrettfolie ausgebildet.

In einer weiteren Ausführungsform wird die Oberfläche der so entstandenen Folie geprägt, wobei vorzugsweise mindestens zwei verschiedene Prägemuster in die die Düsenaustrittslippe verlassende Folie eingeprägt werden.

In einer besonders bevorzugten Ausführungsform werden diese Prägemuster derart in die Folie eingeprägt, daß die nebeneinander angeordneten verschiedenfarbigen Folien jeweils mit einem Prägemuster ausgestattet sind.

Die Prägung wird in der Regel mittels einer Prägewalze mit nebeneinander angeordneten verschiedenen Prägemustern durchgeführt, wobei die gegenseitige Lage der Prägewalze und der Folienlaufbahn mittels einer ein elektrisches oder elektronisches Steuerelement enthaltenden Kontrollvorrichtung kontrolliert und bei Bedarf variiert werden kann. Hierbei kann alternativ entweder die Lage und Ausrichtung der Prägewalze zur Folienlaufbahn oder die Folienbahn zur Prägewalze variiert werden. Vor der Prägung wird die Folienbahn vorzugsweise mittels eines Heizschirms aufgeheizt, wobei ein Temperaturprofil über die gesamte Breite der Folienbahn eingestellt werden kann. In diesem Fall kann auch die Position und Ausrichtung des Heizschirms in den Kontrollmechanismus mit aufgenommen werden.

Die Prägung kann entweder direkt nach Extrusion der Folie oder in einem separaten Arbeitsschritt erfolgen.

In einer weiter bevorzugten Ausführungsform kann vor der Prägung noch eine Glättung der Folien-Oberflächen erfolgen.

Eine bevorzugte Ausführungsform der erfindungsgemäßen Vorrichtung und des Verfahrens zur Herstellung von zwei- oder mehrfarbigen Folien, bei der verschiedenfarbige Oberfolien oder -schichten aufeine Trägerfolie oder -schicht aufgebracht werden, ist unter anderem aus den Zeichnungen ersichtlich.

Die aus den Extrudern (1), (2) und (3) austretenden Kunststoffschmelzen für die Trägerfolie und die verschiedenfarbigen Oberfolien werden über Zuführungsleitungen (4) einer Mehrkanaldüse (5) zugeführt. Über Öffnungen im Gehäuse der Mehrkanaldüse werden diese Zuführungsleitungen mit entsprechenden Fließkanälen (8), (9) und (10) verbunden. Vorzugsweise besteht die Mehrkanaldüse aus mindestens vier übereinander angeordneten und lösbar miteinander verbundenen Platten, zwischen denen sich die Fließkanäle höhenversetzt zueinander erstrecken. Falls mehr als zwei Oberfolien auf die Trägerfolie aufgebracht werden sollen, genügt es, wenn die Fließkanäle von jeweils zwei benachbarten Oberfolienmaterialien höhenversetzt zueinander angeordnet sind, d.h unabhängig von der Anzahl der nebeneinander anzuordnenden Oberfolien genügen erfindungsgemäß vier Platten zum Aufbau einer Mehrkanalextrusionsdüse. Diese Fließkanäle werden zunächst räumlich getrennt in der Mehrkanaldüse geführt und verbreitern sich zur Düsenaustrittslippe (12) hin, aus der die herzustellende Folie austritt und die vorzugsweise als Breitschlitzdüse ausgeführt ist. Diese Verbreiterung kann verschiedene Formen aufweisen, besonders bevorzugt sind 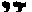 Kleiderbügel"- oder 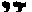 Fischschwanz"-ähnliche Form. Die mindestens zwei verschiedenfarbigen Oberfolien werden hierbei nebeneinander auf die Trägerfolie aufgebracht. Dies wird durch eine besondere Anordnung der Fließkanäle für die Oberfolien erreicht, bei der die Fließkanäle für die beiden verschiedenfarbigen Kunststoffschmelzen für zwei benachbarte verschiedenfarbige Oberfolien an verschiedenen Seiten des Führungsbalkens vorbeigeführt werden. Der Führungsbalken besitzt eine keilförmige, der Austrittslippe zugewandte Führung. Die Verbreiterung der Führungskanäle ist dergestalt, daß sie sich spätestens an der vordersten Kante dieser Führung auf ihre volle Breite, d. h. die gewünschte Breite der entsprechenden Oberfolie, ausdehnen. Die keilähnliche Führung ist nach einer Ausführungsform eine keilähnliche Abflachung oder ein keilähnlicher Ausläufer. Diese ist nach einer anderen Ausführungsform eine im Querschnitt dreieckförmige Leiste. Obengenannte Führung ist am Führungsbalken angeordnet oder bildet mit dem Führungsbalken eine Einheit. Diese keilähnliche Abflachung oder dieser keilähnlicher Ausläufer oder diese Leiste ist nach einer weiteren Ausführungsform zur Erzielung eines weichen Überganges zur Düsenaustrittslippe hin parallel oder annähernd parallel verlaufend abgeflacht.

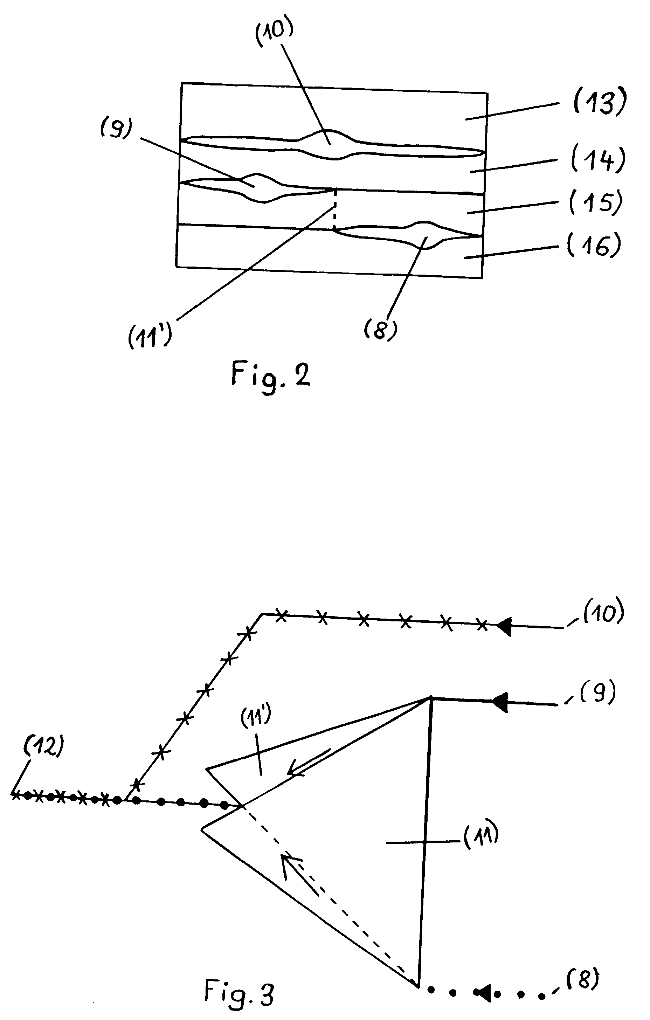

Die in Figur 2 gezeigten Fließkanäle (8) und (9) für zwei verschiedenfarbige Oberfolien werden nicht nur an der Ober- bzw. Unterseite des Führungsbalkens vorbeigeführt, sondern sind auch seitlich gegeneinander versetzt, so daß sie sich nach ihrer Vereinigung an der Vorderkante der keilförmigen Führung bzw. des Vorsprunges zu einem gemeinsamen Fließkanal vereinigen, in dein die beiden verschiedenfarbigen Kunststoffschmelzen nebeneinander, weiterfließen, ohne sich zu vermischen. Dieser gemeinsame Oberfolien- oder Oberschichten-Fließkanal vereinigt sich dann mit demjenigen der Trägerfolie oder -schicht derart, daß die Oberfolien oder -schichten auf die Trägerfolie oder -schicht aufgebracht werden.

Dort, wo die seitlich nebeneinander und auf verschiedenen Seiten des Führungsbalkens entlang geführten Fließkanäle für die verschiedenfarbigen Oberfolien aneinanderstoßen, besitzt der Führungsbalken an seiner keilförmigen Führung sowohl auf deren Ober- als auch an ihrer Unterseite eine in Fließrichtung laufende, hervorstehende Kante. Für den Fall, daß ein 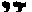 harter" Übergang zwischen den benachbarten, verschiedenfarbigen Oberfolien erzeugt werden soll, ist diese Kante rechtwinklig zur Ober- bzw. Unterseite der keilförmigen Führung angeordnet. Bei einem 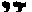 weichen" Übergang ist diese Kante schräg zur Ober- bzw. Unterseite angeordnet, so daß sich die beiden einander zugewandten Seitenkanten der beiden an der Ober- bzw. Unterseite des Führungabalkens vorbeigeführten Fließkanäle komplementär zueinander angeschrägt sind und sich die beiden benachbarten Oberfolien bei ihrer Vereinigung im Übergangsbereich schräg überlappen. Je nach Gestaltung dieser Kante des Führungsbalkens (Winkel, Form und Größe der Kantenfläche) können die Breite und Verlaufsform dieses Farbübergangs/Materialübergangs zwischen zwei benachbarten Oberfolien beliebig gewählt werden. Insbesondere kann sich der Übergangsbereich über die gesamte Folienbreite erstrecken.

Für Folien ohne Trägerfolie oder -schicht findet eine ähnliche Vorrichtung und ein ähnliches Verfahren Verwendung, bei der bzw. dem weder ein Extruder noch Zuführungsleitungen oder Fließkanäle für das Trägerfolienmaterial vorhanden sind. Die Mehrkanalextrusionsdüse besteht hier vorzugsweise aus mindestens drei übereinander angeordneten Platten. Die Verarbeitung der Folienbahnen erfolgt in gleicher Weise wie oben für die Oberfolien beschrieben, wobei der Fließkanal der hinter dem Führungsbalken vereinigten Folienbahnen unmittelbar zur Düsenaustrittslippe führt.

Der Führungsbalken kann entweder mit dem Mehrkanaldüsenblock fest verbunden oder lösbar darin angebracht sein. Die letztere Alternative hat zum Vorteil, daß die Verlaufsform des Übergangs zwischen beiden nebeinander liegenden, verschiedenfarbigen Oberfolien einfach durch Austausch eines modifizierten Führungsbalkens variiert werden kann.

Die aus der Düsenaustrittslippe austretende Folie wird nachfolgend einer Weiterverarbeitung oder -behandlung unterworfen, wie in EP0759351 A1 ausgeführt. In einer besonders bevorzugten Ausführungsform wird die erfindungsgemäß hergestellte Folie in einem nachfolgenden Verarbeitungschritt mit Schaum, Gewebe oder einem Schaumlaminat kaschiert.

In einer weiteren, bevorzugten Ausführungsform besteht die Weiterverarbeitung der Folie in einem Prägeschritt, bei dem vorzugsweise verschiedene Prägemuster in die Oberfläche der Folie eingeprägt werden. Hierbei werden die Prägemuster derart auf die Folie aufgebracht, daß jede der im Extrusionsschritt hergestellten verschiedenfarbigen Folienbahnen oder Folienbahnstreifen ein eigenes charakteristisches Prägemuster erhalten, d. h. daß die Trennlinien zwischen den verschiedenen Prägermuster mit denen zwischen den verschiedenfarbigen Folienbahnen zusammenfallen.

Dies wird in der Regel mittels einer Prägewalze durchgeführt, deren Oberfläche mit mehreren verschiedenen Prägemustern ausgestattet ist. Um die gewünschte Übereinstimmung zwischen den Prägemustern und den verschiedenfarbigen Folienbahnen oder Folienbahnstreifen zu erreichen, kann hierbei die gegenseitige Lage der Prägewalze und der durchlaufenden Folie mittels Sensoren wie z.B. photoelektrischen Sensoren, insbesondere einer CCD-Kamera, ermittelt werden. Diese Daten werden einem elektrischen oder elektronischen Steuerelement zugeführt, welches die Lage und Ausrichtung der Prägewalze und/oder der Folienbahn kontrolliert und bei einer festgestellten Abweichung variiert. In letzterem Fall kann entweder die Lage und Ausrichtung der Prägewalze gegenüber der Folienbahn oder die Führung der Folienbahn z.B. mittels einer an sich bekannten Bahnsteuerung oder Mittensteuerung gegenüber der feststehenden Prägewalze verändert werden.

Vor dem Prägen der Folie kann diese mittels einer Heizvorrichtung, z.B. einem Heizschirm aufgeheizt werden. Da sich hierbei die verschieden eingefärbten Folienbahnen oder Folienbahnstreifen unter Umständen in ihrem Aufheizverhalten unterscheiden, sollte der Heizschirm derart ausgeführt sein, daß die Heizleistung über die Folienbreite kontrolliert werden kann. Vorzugsweise ist hierfür der Heizschirm in separat steuerbare Sektoren eingeteilt, so daß über die gesamte Breite der Folie ein Temperaturprofil eingestellt werden kann. Bei vorhandenem Heizschirm werden auch dessen Position und Ausrichtung gegenüber der durchlaufenden Folie kontrolliert und bei Bedarf korrigiert.

Die Prägung der Folienoberfläche kann sowohl direkt im Anschluß an die Extrusion erfolgen als auch als separater Arbeitsschritt zu einem späteren Zeitpunkt durchgeführt werden. Zwischen der Austrittslippe des Extruders und der Prägevorrichtung bzw. dem Heizschirm kann außerdem eine Glättvorrichtung angeordnet sein..

Das erfindungsgemäße Verfahren bzw. die erfindungsgemäße Vorrichtung erlaubt eine gegenüber dem Stand der Technik verbesserte Kontrolle der Farbübergangsbereiche/Materialübergangsbereiche zwischen zwei benachbarten Oberfolien oder Folienbahnen. Hierunter fallen sowohl die Kontrolle der Lage ( 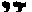 Wandern" von Trennlinie/Übergangsbereich wird vermieden) als auch der Breite und Form dieses Übergangsbereichs bzw. Trennlinie. Insbesondere erlaubt die erfindungsgemäße Vorrichtung und das sie verwendende Verfahren durch den Einsatz und die besondere Gestaltung des Führungsbalkens die kontrollierte Herstellung sowohl von weichen als auch von harten Farbübergängen/Materialübergängen.

Da ferner die Kunststoffschmelzen direkt von den einzelnen Extrudern der Mehrkanalextrusionsdüse zugeführt werden, ist deren unerwünschte Vermischung nicht möglich. Daher können mit der erfindungsgemäßen Vorrichtung im Gegensatz zu der aus EP0759351A1 bekannten auch Materialien mit unterschiedlichen Viskositäten verwendet werden, die sich in ihrem MFI erheblich unterscheiden können. Nach einer Ausführungsform wurden Extrudate unterschiedlicher Viskosität eingesetzt, die sich in ihrem MFI (230/2,16) um bis zu 50 g/10 min unterscheiden können. In einer anderen Ausführungsform wnrden Extrudate verwendet, die sich sogar bis zu einem Faktor 50 in ihrer Viskosität unterscheiden können. Durch das erfindungsgemäße Verführen bzw. die erfindungsgemäße Vorrichtung kann eine gegenüber diesem Stand der Technik auch eine gleichmäßigere Schichtdickenverteilung der Oberfolien oder Oberfolienbahn erzielt werden.

Die vorliegende Erfindung betrifft weiterhin ein Verfahren zur Herstellung von zwei- oder mehrfarbigen Folien bestehend aus mindestens zwei nebeinander angeordneten verschiedenfärbigen Folienbahnen oder Folienbahnstreifen, unter Verwendung einer Vorrichtung, die mindestens zwei Extruder und eine damit verbundene Mehrkanalextrusionsdüse mit einer Düsenaustrittslippe enthält, wobei jeder der Extruder zur Zuführung eines jeweils verschiedenfarbigen Massenstromes ausgelegt ist und wobei die Mehrkanalextrusionsdüse mindestens zwei Eingangsöffnungen aufweist, welche über Zuführungsleitungen mit jeweils einem Ausgang eines Extruders verbunden sind. Nach dem erfindungsgemäßen Verfahren wird eine Mehrkanalextrusionsdüse verwendet, die im Bereich der Zusammenführung der mindestens zwei Massenströme einen sich parallel oder annähernd parallel zur Austrittslippe erstreckenden Führungsbalken aufweist und wobei zwei benachbarte, mit den jeweiligen Zuführungsleitungen verbundene Fließkanäle mit dem jeweils verschiedenfarbigen Massenstrom innerhalb der Mehrkanalextrusionsdüse zunächst räumlich getrennt, zur Austrittslippe hin verbreitert und an zwei verschiedenen Flächen des Führungsbalkens vorbeigeführt werden.

Nach einer weiteren bevorzugten Ausführungsform des erfindungsgemäßen Verfahrens wird eine Mehrkanalextrusionsdüse verwendet, die im Bereich der Zusammenführung der mindestens zwei Oberfolien- oder Oberschichtmaterialien einen sich parallel oder annähernd parallel zur Austrittslippe erstreckenden Führungsbalken aufweist und wobei zwei benachbarte, mit den jeweiligen Zuführungsleitungen verbundene Fließkanäle mit dem jeweils verschiedenfarbigen Oberfolien- oder Oberschichtmaterial innerhalb der Mehrkanalextrusionsdüse zunächst räumlich getrennt, zur Austrittslippe hin verbreiten und an zwei verschiedenen Flächen des Führungsbalkens vorbeigeführt werden.

Bei diesem Verfahren werden zunächst die Fließkanäle der verschiedenfarbigen Oberfolien- oder Oberschichtenmaterialien zusammengeführt und dieser gemeinsame Fließkanal wird dann mit dem Fließkanal des Trägerfolien- oder Trägerschichtenmaterials vereinigt.

Die Fließkanäle werden vorzugsweise zur Führung der Oberfolien- oder Oberschichtenmaterialien und somit die verschiedenfarbigen Massenströme im vorderen Bereich der Mehrkanalextrusionsdüse aneinandergrenzend nebeneinander in jeweils vorgegebenen Breiten über die volle oder annähernd volle Breite der Düse erstreckend geführt. Entsprechend verbreitern sich die Extrudatströme.

Bevorzugt wird ein Fließkanal für das Trägerfolienmaterial verwendet, der sich im vorderen Bereich der Mehrkanalextrusionsdüse über die volle oder annähernd volle Breite der Düse erstreckt.

Nach einem bevorzugten Verfahren wird eine Mehrkanalextrusionsdüse verwendet, die aus mindestens vier übereinander angeordneten Platten besteht, wobei jeweils zwischen zwei benachbarten Platten mindestens ein Fließkanal angeordnet ist, wobei die Fließkanäle im hinteren Bereich der Mehrkanalextrusionsdüse räumlich getrennt geführt werden.

Nach einer Ausführungform werden Fließkanäle zur Führung der Folienbahnmaterialien verwendet, die sich im vorderen Bereich der Mehrkanalextrusionsdüse aneinandergrenzend nebeneinander in jeweils vorgegebenen Breiten über die volle oder annähernd volle Breite der Düse erstrecken.

Bevorzugt wird jedoch eine Mehrkanalextrusionsdüse verwendet, die aus mindestens drei übereinander angeordneten Platten besteht, wobei jeweils zwischen zwei benachbarten Planen mindestens ein Fließkanal angeordnet ist, wobei die Fließkanäle im hinteren Bereich der Mehrkanalextrusionsdüse räumlich getrennt geführt werden.

Der Führungsbalken weist mindestens eine am Führungsbalken angeordnete keilähnliche Führung auf.

Zweckmäßig werden die Fließkanäle innerhalb der Mehrkanalextrusionsdüse erst in deren vorderen Bereich verbreitert und, vorzugsweise in Flußrichtung hinter dem Führungsbalken, zusammengeführt. Je nachdem, wie die Übergänge zwischen den Folienstreifen ausgebildet sein sollen, ist die Kantenausbildung im Grenzbereich.

Zur Erzielung eines harten Übergangs wird ein Führungsbalken verwendet, der in jeder der beiden Flächen in diesem Grenzbereich eine in etwa parallel zur Extrusionsrichtung und in etwa senkrecht zur jeweiligen Fläche angeordnete in etwa rechtwinklige Kante aufweist.

Zur Erzielung eines weichen Übergangs wird ein Führungsbalken verwendet, der in jeder der beiden Flächen in diesem Grenzbereich eine in etwa parallel zur Extrusionsrichtung und in einem Winkel zur jeweiligen Fläche angeordnete abgeschrägte Kante aufweist.

Nach einer bevorzugten Ausführungsform des erfindungsgemäßen Verfahrens wird der Überlappbereich der beiden benachbarten verschiedenfarbigen Materialien bei einem weichen Übergang durch die Verlaufsform der abgeschrägten Kante bestimmt.

Mit Hilfe des erfindungsgemäßen Verfahrens können die unterschiedlichsten farbigen Folienbahnen oder Folienstreifen hergestellt werden. Die zwei- oder mehrfarbige Folie wird als Schalttafelfolie, Armaturenbrettfolie, Seitenwandteile, Türverkleidungen, Dachinnenverkleidungen, Innenrückwandteile, Armstützenverkleidungen und andere Innenverkleidungsteile für Kraftfahrzeuge verwendet

### Zeichnungsbeschreibung

In den Zeichnungen sind Ausführungsformen des erfindungsgemäßen Verfahrens unter Verwendung der erfindungsgemäßen Vorrichtungen schematisch dargestellt.

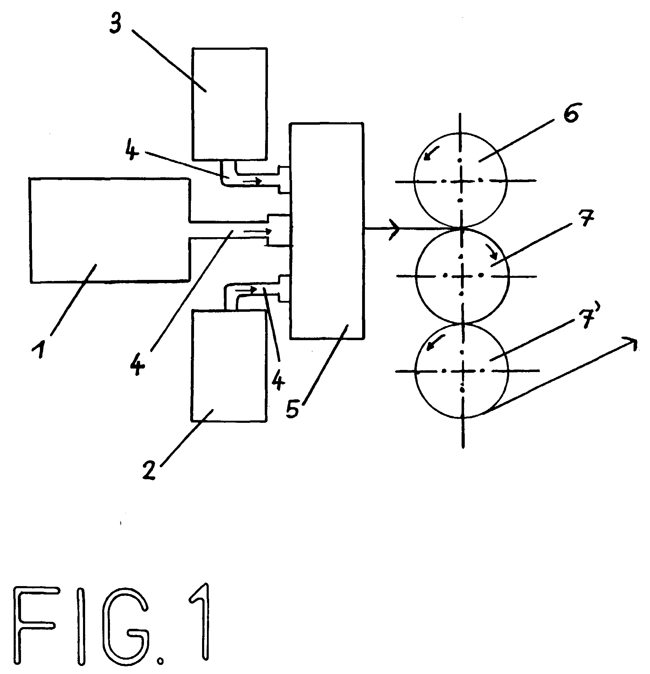

In Figur 1 ist der Extruder (1) mit Coextrusionsvorrichtung (2) und (3) direkt mit Mehrkanalextrusionsdüse (5) über Zuführungsleitungen (4) verbunden. Bei der einfachen Ausführungsform gemäß Figur 1 gelangt die ein- oder mehrschichtige Folie zu den Glättwerkwalzen (6) und (7) (mit und ohne Prägestruktur) und der weiteren Kühlwalze (7').

Figur 2 stellt einen Querschnitt senkrecht zur Fließrichtung durch die Mehrkanalextrusionsdüse dar. Für die bevorzugte Ausführungsform zur Herstellung einer aus einer Trägerfolie und mindestens zwei darüber angeordneten Oberfolien bestehenden Folie ist die Mehrkanalsextrusionsdüse aus 4 Platten aufgebaut, wobei jeweils zwischen zwei benachbarten Platten ein Fließkanal angeordnet ist. Die Fließkanäle (8) und (9) zur Führung des Massenstroms der verschiedenfarbigen Oberfolienmaterialien befinden sich zwischen den Platten (14) bis (16), der Fließkanal (10) des Trägerfolienmaterials zwischen den Platten (13) und (14). Der Führungsbalken (11) befindet sich zwischen den Fließkanälen (8) und (9) und besitzt dort, wo zwei benachbarte Fließkanäle zusammenfließen, auf jeder seiner beiden Ebenen eine Kante (11'), die mi Falle eines harten Übergangs senkrecht oder annähernd senkrecht zu der jeweiligen Ebene angeordnet ist.

Eine Seitenansicht des Führungsbalkens (11) ist in Figur 3 für die bevorzugte Ausführungsform zur Herstellung einer aus einer Trägerfolie und mindestens zwei darüber angeordneten Oberfolien bestehenden Folie gezeigt. Hierbei werden die Fließkanäle (8) und (9) zur Führung des Massenstroms der verschiedenfarbigen Oberfolienmaterialien zunächst an einem Führungsbalken (11) vorbeigeführt und anschließend mit dem Fließkanal (10) des Trägerfolienmaterials vereint. Dieser gemeinsame Fließkanal wird bis zur Düsenaustrittslippe (12) geführt.

## Patentansprüche

1. Vorrichtung zur Herstellung von zwei- oder mehrfarbigen Folien bestehend aus mindestens zwei nebeneinander angeordneten verschiedenfarbigen Folienbahnen oder Folienbahnstreifen, beinhaltend eine Vorrichtung, die mindestens zwei Extruder und eine damit verbundene Mehrkanalextrusionsdüse mit einer Düsenaustrittslippe enthält, wobei jeder der Extruder zur Zuführung eines jeweils verschiedenfarbigen Massenstromes ausgelegt ist, und wobei die Mehrkanalextrusionsdüse mindestens zwei Eingangsöffnungen aufweist, welche über Zuführungsleitungen mit jeweils einem Ausgang eines Extruders verbunden sind und von denen ausgehend innerhalb der Mehrkanalextrusionsdüse angeordnete Fließkanäle bis zur Düsenaustrittslippe geführt sind, dadurch gekennzeichnet, daß die Mehrkanalextrusionsdüse mi Bereich der Zusammenführung der mindestens zwei Massenströme einen sich parallel oder annähernd parallel zur Austrittslippe erstreckenden Führungsbalken aufweist und wobei zwei benachbarte, mit den jeweiligen Zuführungsleitungen verbundene Fließkanäle für den jeweils verschiedenfarbigen Massenstrom innerhalb der Mehrkanalextrusionsdüse zunächst räumlich getrennt, zur Austrittslippe hin verbreitert und an zwei verschiedenen Flächen des Führungsbalkens vorbeigeführt sind.

2. Vorrichtung zur Herstellung von zwei- oder mehrfarbigen Folien bestehend aus einer Trägerfolie oder Trägerschicht und mindestens zwei nebeneinander auf dieser Trägerfolie oder Trägerschicht angeordneten verschiedenfarbigen Oberfolien oder Oberschichten, beinhaltend eine Vorrichtung, die mindestens drei Extruder und eine damit verbundene Mehrkanalextrusionsdüse mit einer Düsenaustrittslippe enthält, wobei einer der Extruder zur Zuführung von Trägerfolien- oder Tragerschichtmaterial und mindestens zwei Extruder zur Zuführung von unterschiedlich gefärbten Oberfolien- oder Oberschichtmaterialien ausgelegt sind, dadurch gekennzeichnet, daß die Mehrkanalextrusionsdüse im Bereich der Zusammenführung der mindestens zwei Oberfolien- oder Oberschichtmaterialien einen sich parallel oder annähernd parallel zur Austrittslippe erstreckenden Führungsbalken aufweist und wobei zwei benachbarte, mit den jeweiligen Zuführungsleitungen verbundene Fließkanäle für das jeweils verschiedenfarbige Oberfolien- oder Oberschichtmaterial innerhalb der Mehrkanalextrusionsdüse zunächst räumlich getrennt, zur Austrittslippe hin verbreiten und an zwei verschiedenen Flächen des Führungsbalkens vorbeigeführt sind.

3. Vorrichtung gemäß Anspruch 2, dadurch gekennzeichnet, daß zunächst die Fließkanäle der verschiedenfarbigen Oberfolien- oder Oberschichtenmaterialien zusammengeführt, und dieser gemeinsame Fließkanal dann mit dem Fließkanal des Trägerfolien- oder Trägerschichtenmaterials vereinigt ist.

4. Vorrichtung gemäß Anspruch 2 oder 3, dadurch gekennzeichnet, daß sich die Fließkanäle zur Führung der Oberfolien- oder Oberschichtenmaterialien im vorderen Bereich der Mehrkanalextrusionsdüse aneinandergrenzend nebeneinander in jeweils vorgegebenen Breiten über die volle oder annähernd volle Breite der Düse erstrecken.

5. Vorrichtung gemäß einem oder mehreren der Ansprüche 2 bis 4, dadurch gekennzeichnet, daß der Fließkanal für das Trägerfolienmaterial sich im vorderen Bereich der Mehrkanalextrusionsdüse über die volle oder annähernd volle Breite der Düse erstreckt.

6. Vorrichtung gemäß einem oder mehreren der Ansprüche der Ansprüche 2 bis 5, dadurch gekennzeichnet, daß die Mehrkanalextrusionsdüse aus mindestens vier übereinander angeordneten Platten besteht, wobei jeweils zwischen zwei benachbarten Platten mindestens ein Fließkanal angeordnet ist, wobei die Fließkanäle im hinteren Bereich der Mehrkanalextrusionsdüse räumlich getrennt sind.

7. Vorrichtung gemäß Anspruch 1, dadurch gekennzeichnet, daß sich die Fließkanäle zur Führung der Folienbahnmaterialien im vorderen Bereich der Mehrkanalextrusionsdüse aneinandergrenzend nebeneinander in jeweils vorgegebenen Breiten über die volle oder annähernd volle Breite der Düse erstrecken.

8. Vorrichtung gemäß einem der Ansprüche 1 oder 7, dadurch gekennzeichnet, daß die Mehrkanalextrusionsdüse aus mindestens drei übereinander angeordneten Platten besteht, wobei jeweils zwischen zwei benachbarten Platten mindestens ein Fließkanal angeordnet ist, wobei die Fließkanäle im hinteren Bereich der Mehrkanalextrusionsdüse räumlich getrennt sind.

9. Vorrichtung gemäß einem oder mehreren der Ansprüche 1 bis 8, dadurch gekennzeichnet, daß der Führungsbalken mindestens eine am Führungsbalken angeordnete keilähnliche Führung aufweist.

10. Vorrichtung gemäß einem oder mehreren der Ansprüche 1 bis 9, dadurch gekennzeichnet, daß die Fließkanäle innerhalb der Mehrkanalextrusionsdüse erst in deren vorderen Bereich verbreitert und, vorzugsweise in Flußrichtung hinter dem Führungsbalken, zusammengeführt sind.

11. Vorrichtung gemäß einem oder mehreren der Ansprüche 1 bis 10, dadurch gekennzeichnet, daß zur Erzielung eines harten Übergangs der Führungsbalken in jeder der beiden Flächen in diesem Grenzbereich eine in etwa parallel zur Extrusionsrichtung und in etwa senkrecht zur jeweiligen Fläche angeordnete in etwa rechtwinklige Kante aufweist.

12. Vorrichtung gemäß einem oder mehreren der Ansprüche 1 bis 11, dadurch gekennzeichnet, daß zur Erzielung eines weichen Übergangs der Führungsbalken in jeder der beiden Flächen in diesem Grenzbereich eine in etwa parallel zur Extrusionsrichtung und in einem Winkel zur jeweiligen Fläche angeordnete abgeschrägte Kante aufweist.

13. Vorrichtung gemäß Anspruch 12, dadurch gekennzeichnet, daß der Überlappbereich der beiden benachbarten verschiedenfarbigen Materialien bei einem weichen Übergang durch die Verlaufsform der abgeschrägten Kante bestimmt wird.

14. Vorrichtung gemäß einem oder mehreren der Ansprüche 1 bis 13, dadurch gekennzeichnet, daß die zwei- oder mehrfarbige Folie als Schalttafelfolie, Armaturenbrettfolie ausgebildet ist.

15. Vorrichtung gemäß einem oder mehreren der Ansprüche 1 bis 14, dadurch gekennzeichnet, daß in Materialflußrichtung hinter der Düsenaustrittslippe eine Prägeeinrichtung angeordnet ist.

16. Vorrichtung gemäß Anspruch 15, dadurch gekennzeichnet, daß die Prägevorrichtung mindestens zwei verschiedene Prägemuster besitzt und derart ausgelegt ist, daß mindestens zwei verschiedene Prägemuster in die die Düsenaustrittslippe verlassende Folie eingeprägt werden, vorzugsweise derart, daß die nebeneinander angeordneten verschiedenfarbigen Folienjeweils mit einem Prägemuster ausgestattet sind.

17. Vorrichtung gemäß einem der Ansprüche 15 oder 16, dadurch gekennzeichnet, daß die Prägevorrichtung eine Prägewalze mit nebeneinander angeordneten verschiedenen Prägemustern beinhaltet.

18. Vorrichtung gemäß einem oder mehreren der Ansprüche 15 bis 17, dadurch gekennzeichnet, daß zwischen Austrittslippe und Prägevorrichtung ein Heizschirm zum Aufheizen der Folienbahn angeordnet ist, der vorzugsweise derart in Sektionen eingeteilt ist, daß über die gesamte Folienbreite ein Temperaturprofil eingestellt werden kann.

19. Vorrichtung gemäß einem der Ansprüche 17 oder 18, gekennzeichnet durch eine Kontrolleinrichtung, die ein elektrisches oder elektronisches Steuerelement zur Kontrolle und bedarfsweisen Änderung der gegenseitigen Lage und Position der Prägewalze, des Heizschirms und/oder der aus der Austrittslippe austretenden Folie enthält.

20. Vorrichtung gemäß einem oder mehreren der Ansprüche 15 bis 19, dadurch gekennzeichnet, daß zwischen Austrittslippe und Prägevorrichtung bzw. Heizschirm, eine Glättvorrichtung angeordnet ist.

21. Verfahren zur Herstellung von zwei- oder mehrfarbigen Folien bestehend aus mindestens zwei nebeinander angeordneten verschiedenfarbigen Folienbahnen oder Folienbahnstreifen, unter Verwendung einer Vorrichtung, die mindestens zwei Extruder und eine damit verbundene Mehrkanalextrusionsdüse mit einer Düsenaustrittslippe enthält, wobei jeder der Extruder zur Zuführung eines jeweils verschiedenfarbigen Massenstromes ausgelegt ist, und wobei die Mehrkanalextrusionsdüse mindestens zwei Eingangsöffnungen aufweist, welche über Zuführungsleitungen mit jeweils einem Ausgang eines Extruders verbunden sind, dadurch gekennzeichnet, daß eine Mehrkanalextrusionsdüse verwendet wird, die im Bereich der Zusammenführung der mindestens zwei Massenströme einen sich parallel oder annähernd parallel zur Austrittslippe erstreckenden Führungsbalken aufweist, und wobei zwei benachbarte, mit den jeweiligen Zuführungsleitungen verbundene Fließkanäle mit dem jeweils verschiedenfarbigen Massenstrom innerhalb der Mehrkanalextrusionsdüse zunächst räumlich getrennt, zur Austrittslippe hin verbreiten und an zwei verschiedenen Flächen des Führungsbalkens vorbeigeführt werden.

22. Verfahren zur Herstellung von zwei- oder mehrfarbigen Folien bestehend aus einer Trägerfolie oder Trägerschicht und mindestens zwei nebeinander aufdieser Trägerfolie oder Trägerschicht angeordneten verschiedenfarbigen Oberfolien oder Oberschichten, unter Verwendung einer Vorrichtung, die mindestens drei Extruder und eine damit verbundene Mehrkanalextrusionsdüse mit einer Düsenaustrittslippe enthält, wobei einer der Extruder zur Zuführung von Trägerfolien- oder Trägerschichtmaterial und mindestens zwei Extruder zur Zuführung von unterschiedlich gefärbten Oberfolien- oder Oberschichtmaterialien ausgelegt sind, dadurch gekennzeichnet, daß eine Mehrkanalextrusionsdüse verwendet wird, die im Bereich der Zusammenführung der mindestens zwei Oberfolien- oder Oberschichtmaterialien einen sich parallel oder annähernd parallel zur Austrittslippe erstreckenden Führungsbalken aufweist und wobei zwei benachbarte, mit den jeweiligen Zuführungsleitungen verbundene Fließkanäle mit dem jeweils verschiedenfarbigen Oberfolien- oder Oberschichtmaterial innerhalb der Mehrkanalextrusionsdüse zunächst räumlich getrennt, zur Austrittslippe hin verbreitert und an zwei verschiedenen Flächen des Führungsbalkens vorbeigeführt werden.

23. Verfahren gemäß Anspruch 22, dadurch gekennzeichnet, daß zunächst die Fließkanäle der verschiedenfarbigen Oberfolien- oder Oberschichtenmaterialien zusammengeführt werden, und dieser gemeinsame Fließkanal dann mit dem Fließkanal des Trägerfolien- oder Trägerschichtenmaterials vereinigt wird.

24. Verfahren gemäß Anspruch 22 oder 23, dadurch gekennzeichnet, daß die Fließkanäle zur Führung der Oberfolien- oder Oberschichtenmaterialien und somit die verschiedenfarbigen Massenströme im vorderen Bereich der Mehrkanalextrusionsdüse aneinandergrenzend nebeneinander in jeweils vorgegebenen Breiten über die volle oder annähernd volle Breite der Düse erstreckend geführt werden.

25. Verfahren gemäß einem oder mehreren der Ansprüch 22 bis 24, dadurch gekennzeichnet, daß ein Fließkanal für das Trägerfolienmaterial verwendet wird, der sich im vorderen Bereich der Mehrkanalextrusionsdüse über die volle oder annähernd volle Breite der Düse erstreckt.

26. Verfahren gemäß einem oder mehreren der Ansprüche 22 bis 25, dadurch gekennzeichnet, daß eine Mehrkanalextrusionsdüse verwendet wird, die aus mindestens vier übereinander angeordneten Platten besteht, wobei jeweils zwischen zwei benachbarten Platten mindestens ein Fließkanal angeordnet ist, wobei die Fließkanäle im hinteren Bereich der Mehrkanalextrusionsdüse räumlich getrennt geführt werden.

27. Verfahren gemäß Anspruch 21, dadurch gekennzeichnet, daß Fließkanäle zur Führung der Folienbahnmaterialien verwendet werden, die sich im vorderen Bereich der Mehrkanalextrusionsdüse aneinandergrenzend nebeneinander in jeweils vorgegebenen Breiten über die volle oder annähernd volle Breite der Düse erstrecken.

28. Verfahren gemäß einem der Ansprüche 21 oder 27, dadurch gekennzeichnet, daß eine Mehrkanalextrusionsdüse verwendet wird, die aus mindestens drei übereinander angeordneten Platten besteht, wobei jeweils zwischen zwei benachbarten Planen mindestens ein Fließkanal angeordnet ist, wobei die Fließkanäle im hinteren Bereich der Mehrkanalextrusionsdüse räumlich getrennt geführt werden.

29. Verfahren gemäß einem oder mehreren der Ansprüche 21 bis 28, dadurch gekennzeichnet, daß der Führungsbalken mindestens eine am Führungsbalken angeordnete keilähnliche Führung aufweist.

30. Verfahren gemäß einem oder mehreren der Ansprüche 21 bis 29, dadurch gekennzeichnet, daß die Fließkanäle innerhalb der Mehrkanalextrusionsdüse erst in deren vorderen Bereich verbreiten und, vorzugsweise in Flußrichtung hinter dem Führungsbalken, zusammengeführt werden.

31. Verfahren gemäß einem oder mehreren der Ansprüche 21 bis 30, dadurch gekennzeichnet, daß zur Erzielung eines harten Übergangs ein Führungsbalken eingesetzt oder verwendet wird, der in jeder der beiden Flächen in diesem Grenzbereich eine in etwa parallel zur Extrusionsrichtung und in etwa senkrecht zur jeweiligen Fläche angeordnete in etwa rechtwinklige Kante aufweist.

32. Verfahren gemäß einem oder mehreren der Ansprüche 21 bis 31, dadurch gekennzeichnet, daß zur Erzielung eines weichen Übergangs ein Führungsbalken eingesetzt oder verwendet wird, der in jeder der beiden Flächen in diesem Grenzbereich eine in etwa parallel zur Extrusionsrichtung und in einem Winkel zur jeweiligen Fläche angeordnete abgeschrägte Kante aufweist.

33. Verfahren gemäß Anspruch 32, dadurch gekennzeichnet, daß der Überlappbereich der beiden benachbarten verschiedenfarbigen Materialien bei einem weichen Übergang durch die Verlaufsform der abgeschrägten Kante bestimmt wird.

34. Verfahren gemäß einem oder mehreren der Ansprüche 21 bis 33, dadurch gekennzeichnet, daß die zwei- oder mehrfarbige Folie als Schalttafelfolie, Armaturenbrettfolie, Seitenwandteile, Türverkleidungen, Dachinnenverkleidungen, Innenrückwandteile, Armstützenverkleidungen und andere Innenverkleidungsteile für Kraftfahrzeuge verwendet wird.

35. Verfahren gemäß einem oder mehreren der Ansprüche 21 bis 34, dadurch gekennzeichnet, daß in Materialflußrichtung hinter der Düsenaustrittslippe ein Prägeschritt durchgeführt ist.

36. Verfahren gemäß Anspruch 35, dadurch gekennzeichnet, daß in diesem Prägeschritt mindestens zwei verschiedene Prägemuster in die die Düsenaustrittslippe verlassende Folie eingeprägt werden, vorzugsweise derart, daß die nebeneinander angeordneten verschiedenfarbigen Folien jeweils mit einem Prägemuster ausgestattet sind, wobei vorzugsweise die Trennlinie zwischen zwei benachbarten verschiedenfarbigen Folienbahnen oder Folienbahnstreifen mit der Trennlinie zwischen zwei benachbarten verschiedenen Mustern zusammenfällt.

37. Verfahren gemäß einem der Ansprüche 35 oder 36, dadurch gekennzeichnet, daß der Prägeschritt mittels einer Prägewalze mit nebeneinander angeordneten verschiedenen Prägemustern durchgeführt wird.

38. Verfahren gemäß einem oder mehreren der Ansprüche 35 bis 37, dadurch gekennzeichnet, daß die Folienbahn vor dem Prägeschritt mittels eines Heizschirms aufgeheizt wird, wobei vorzugsweise ein Temperaturprofil über die gesamte Folienbreite eingestellt wird.

39. Verfahren gemäß Anspruch 37, dadurch gekennzeichnet, daß die gegenseitige Lage und Position der Prägewalze und der aus der Austrittslippe austretenden Folie mittels einer ein elektrisches oder elektronisches Steuerelement enthaltenden Kontrolleinrichtung kontrolliert und bei Bedarf variiert wird.

40. Verfahren gemäß Anspruch 38, dadurch gekennzeichnet, daß die gegenseitige Lage und Position der Prägewalze, des Heizschirms und/oder der aus der Austrittslippe austretenden Folie mittels einer ein elektrisches oder elektronisches Steuerelement enthaltenden Kontrolleinrichtung kontrolliert und bei Bedarf variiert wird.

41. Verfahren gemäß einem oder mehreren der Ansprüche 35 bis 40, dadurch gekennzeichnet, daß der Prägeschritt entweder direkt im Anschluß an die Extrusion der Folie oder als separater Arbeitsschritt erfolgt, wobei vorzugsweise vor dem Prägeschritt bzw. Aufheizschritt ein Glättungsschritt durchgeführt wird.
